# EUROPEAN PATENT SPECIFICATION

(11) **EP 2 749 548 B1**
(45) Date of publication and mention of the grant of the patent: **22.05.2019**
(21) Application number: 13006007.2
(22) Date of filing: 23.12.2013
(51) Int. Cl.: C04B 26/06, C04B 14/06, C09D 7/61, C08K 3/36, C04B 41/87, C04B 111/40

(54) **Low density surface coating paste for plaster**
Paste mit geringer Dichte zur Oberflächenbeschichtung für Putz
Pâte à densité baisse de revêtement superficiel pour enduit

(30) Priority: 28.12.2012 IT TO20121170
(43) Date of publication of application: 02.07.2014
(73) Proprietor: Forgione, Debora, Buccinasco (IT)
(72) Inventor: Forgione, Gerardo, I-17021 Alassio (SV) (IT); Gallo, Enrico, I-17021 Alassio (SV) (IT)
(74) Representative: Aprà, Mario

(56) References cited:
- EP-A1- 2 639 208
- WO-A1-2005/044727
- DE-A1- 4 437 424
- FR-A1- 2 955 102
- James Pidhurney ET AL: "Aerogel for Highly Thermally Insulative Coatings", CoatingsTech, 1 June 2012 (2012-06-01), pages 46-48, XP055078537, Retrieved from the Internet: URL:http://www.cabot-corp.com/wcm/download /en-us/unknown/June 2012 CoatingsTech Aerogel Article_web.pdf [retrieved on 2013-09-10]
- Azadeh Tadjarodi ET AL: "Preparation and characterization of nano-porous silica aerogel from rice husk ash by drying at atmospheric pressure", Materials Research Bulletin, vol. 47, no. 9, 1 September 2012 (2012-09-01), pages 2584-2589, XP055078280, ISSN: 0025-5408, DOI: 10.1016/j.materresbull.2012.04.143

## Description

The present invention relates to a low density surface coating paste for plaster.

The utilization of silicate aerogels in the production of thermo-insulating materials, usually in the shape of panels, is well known in the state of art.

In fact, the utilization of a percentage of aerogel in the composition of the aforementioned materials allows to obtain an appreciable level of thermal insulation, at the same time granting a more contained specific weight if compared to the common thermo-insulating materials.

Document CN101468907 discloses a thermal-insulating paste, comprising:
- nano silicate aerogel 20 ∼ 50%;
- organic closed-ring matherial microspheres 0 ∼ 30%;
- expanded perlite 7 ∼ 15%;
- bentonite 0 ∼ 1%;
- penetrating agent 2 ∼ 6%;
- adhesive 10 ∼ 20%;
- calcium silicate fiber 3 ∼ 6%;
- aluminum and magnesium silica fiber 0 ∼ 5%;
- aluminum silica fiber 0 ∼ 5%;
- water 0 ∼ 40%;
- fireproof sbstances 0,1 ∼ 2%;
- coloring substances 3 ∼ 7%.

By the way, said known thermal-insulating paste provides a quite complex composition, with all the consequences in terms of difficulties and elevate costs for the production of the same.

In adding, considered the composition of said known thermo-insulating paste, it is evident how the specific weight of the same tends to be relatively high, with all the inevitable consequences on the total weight of the final product after the application, as well as the evident prejudice in terms of efficacy in thermal insulation.

From document n. WO2010128294 A1 it is known a method for the production of a low density solid material deriving from rice, comprising a first solid layer comprising a gel obtained from the by-products of rice processing, a second layer at the solid state, comprising a gel obtained from ground rough rice, said first and said second layers being after submitted to a lamination process, in order to obtain said solid material substantially in the shape of a panel.

Said known solid panel has effectively a relatively low specific weight, and an appreciable level of thermal-insulation.

By the way, said lamination process may, first of all, be harmful for the aerogel, since the last is inevitably submitted to high molding pressures.

In adding, said two aerogels are separated one another, each one representing one respective of said two layers of the panel, without attaining any synergic effect.

Further, said known material presenting itself substantially as a double-layered laminated panel, inevitable inconveniences derive as a consequence during the application phase, which results definitely not easy.

Moreover, said known solid laminated material does not allow to lay down a thin layer of surface finish directly on the plaster.

On the other hand, the productive process of said known solid material, even if more economical if compared to the known ones for the obtaining of common silicate aerogels, still requires an essentially complex processing.

Document EP 2 639208 A1 discloses compositions fro thermal insulating coatings comprising aggreagtes in micronized form or granular materials.

Furthermore WO2005/044727 describes a method for producing silica aerogel from rice husk ash.

J. Pidhurney and P.F.Pescatore in "Aerogel for highly Thermally Insulative Coatings" (June 2012) discuss the use of silica aerogels to achieve lower thermal conductivities.

The present invention, starting from the notion of the aforesaid problems, intends to provide a solution.

An object of the present invention is to provide a low density surface coating paste for plaster that results of easy application during the laying phase, at the same time granting the high quality of the final product.

In adding, it is an object of the present invention to provide a low density surface coating paste as said, where the constituent materials are not exposed to possible damage risks during the production process.

It is also an object of the present invention to provide a low density surface coating paste as above said, that allows the obtaining of a homogeneous compound, with synergic effect between the different aerogel components included in the same.

Another further object of the present invention is to provide a low density surface coating paste as said, having relatively high thermo-insulating properties and, at the same time, fireproof ones.

In adding, it is also an object of the present invention to provide a low density surface coating paste as indicated, which has a relatively low specific weight, and that allows an appreciable overall lightness level of the product, after the application.

On the other hand, it is a further object of the present invention to provide a low density surface coating paste as said, the production of which results simple and relatively economical. In view of these objects, the present invention provides a low density surface coating paste for plaster, the essential characteristic of which forms the subject of the main claim, while further advantageous characteristics of the invention are described in the dependent claims.

The aforesaid claims are intended as fully incorporated herein. The attached drawings show:
- Figures from 1 to 8 microphotographs of the morphological structure of a silicate aerogel;
- Figures from 9 to 22 microphotographs of the morphological structure of an aerogel derived from by-products of rice processing.

In what follows, a detailed embodiment of the present invention is described.

In particular, the low density surface coating paste for plaster according to the present invention is essentially characterized in that it comprises, in percentage by weight:
- a mixture of aerogel with two components from 1 to 50%, including:
   - silicate aerogel, derived from gel obtained from a process to dry wet silica, from 1 to 38%;
   - aerogel derived from by-products of rice processing, from 1 to 80%;
      - binders from 1 to 30%;
      - ground cork from 1 to 15%;
      - inert fillers from 0.1 to 10%;
      - water, residual percentage.

The different nature of the two aforementioned silicate, derived from by-products of rice processing respectively, aerogels, has been examined - by assignment of an inventor's company - by "Innovhub Stazioni Sperimentali per l'Industriale" - Milan, that in two different reports both dated 25.11.2013 has reported the following results.

The exams have been done by means of electronic microscope SEM - method: Inner PF4-1:2005.
Tool: electronic scanning microscope (SEM-FEG) Tescan MIRA3.
a) With reference to the silicate aerogel, *the morphological analysis has underlined that the sample looks like an almost compact agglomerate of nanoparticles. At elevate enlargements it is possible to observe the nanostructure of the particles, resulting spherical and regular both in their shape and dimensions. The sample is homogenous both internally and externally. Inside the structure are not evident hollow or discontinuous zones. The particles dimensions are comprised between 20 and 40 nm* (please see Figures from 1 to 8, which show the respective microphotographs, attached to the present relation).
b) With reference to the aerogel derived from by-products of rice processing, *the morphological analysis has underlined that the sample has a complex structure, characterized by a continuous and heterogeneous surface. The whole structure has discontinuous zones, with a great number of cavities of different dimensions. In the breaking points, the structure presents sections with different thickness. Internally, it is possible to observe a succession of continuous and transverse channels with irregular dimensions and shape. The surface is characterized, on both sides, by a great number of inorganic deposits, with regular and repeated geometrical shapes, mainly rectangular shaped and with variable length. In certain points said structures mainly develop in a longitudinal direction. Said deposits are present in the whole sample and develop themselves according to different lines and directions* (please see Figures from 9 to 22, which show the respective microphotographs, attached to the present relation).

As it is possible to see from the aforementioned reports, the morphological structure of the silicate aerogel is characterized by the main presence of nanoparticles *"resulting spherical and regular both in their shape and dimensions";* on the other hand in the case of the aerogel derived from by-products of rice processing it is observed a morphological structure presenting "a *succession of continuous and transverse channels with irregular dimensions and shape. The surface is characterized, on both sides, by a great number of inorganic deposits, with regular and repeated geometrical shapes, mainly rectangular shaped and with variable length. In certain points said structures mainly develop in a longitudinal direction. Said deposits are present in the whole sample and develop themselves according to different lines and directions".*

The mixture of silicate aerogel and aerogel derived from by-products of rice processing, indicated in the foregoing as the essential characteristic of the present invention, provides a surface coating material that, due to its pasty consistency, has an easy and quick application, at the same time allowing the achievement of an homogeneous and high quality final result.

In particular, the utilization of the aforementioned mixture of aerogels allows the achievement of a synergic result which is appreciable both in terms of thermal insulation (due to the main action of the silicate aerogel) and fireproof effect (due to the main action of the aerogel derived from by-products of rice processing).

In adding, due to the utilization of said mixture of aerogels and a percentage of ground cork, said surface coating paste advantageously presents an appreciable level of lightness. Further, said surface coating paste presents a relatively simple composition, and so obtainable by an easy manufacturing process and with relatively low costs.

Advantageously, in a preferred embodiment of the present invention, the low density surface coating paste for plaster according to the invention, including said mixture of aerogel with two components has, in percentage by weight, the present composition:
- silicate aerogel, derived from gel obtained from a process to dry wet silica, 38% maximum;
- aerogel, derived from gel obtained from by-products of rice processing, 35% maximum.

Still according to the present embodiment, said low density surface coating paste for plaster according to the invention further comprises, in percentage by weight:
- binders, 18% maximum.

Advantageously, said binders belong to the family of acrylic resins.

Said inert fillers, having the function to provide the optimum consistency to said surface coating paste, may comprise, alternatively or jointly:
- ceramic microspheres;
- ceramic macrospheres;
- polystyrene beads.

Said low density surface coating paste for plaster according to the present invention is characterized by a relatively low specific weight; more in particular it is estimated that, with reference to variation of the percentages by weight of the different components, said specific surface coating paste has a specific weight between 0.025 g/cm³ and 0.060 g/cm³.

As evident from the aforementioned, said low density surface coating paste for plaster according to the present invention is of easy application during the laying phase, and at the same time it grants the high quality of the final product.

In adding, said low density surface coating paste as indicated, due to its consistency, allows an easy manufacturing and following application without any risk in the terms of prejudice for the components contained in the same and, in particular, for the mixture of aerogels.

In adding, said low density surface coating paste as indicated, comprising a mixture of different aerogels, allows the achievement of a synergic effect in terms of thermal insulation and fireproof effectiveness, deriving from the mixture of the same.

Further, said low density surface coating paste as indicated has a relatively low specific weight, with its consequences in terms of overall lightness of the product, after the application.

On the other hand, said low density surface coating paste results simple and relatively economical.

As will be clear from the foregoing, the present invention allows the objects set forth in the introduction of the present description to be achieved in a simple and effective manner.

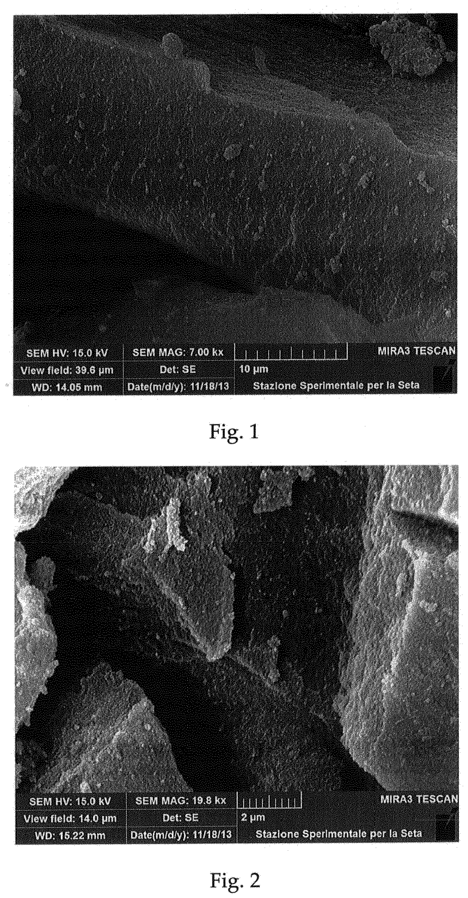

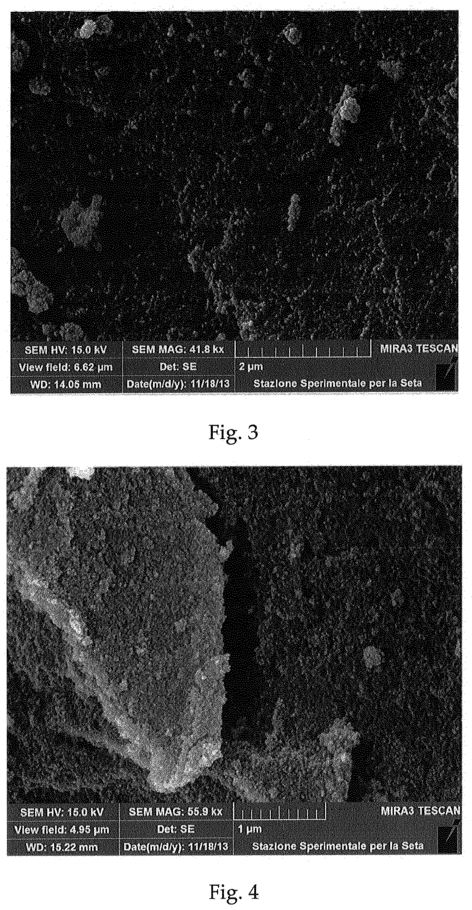

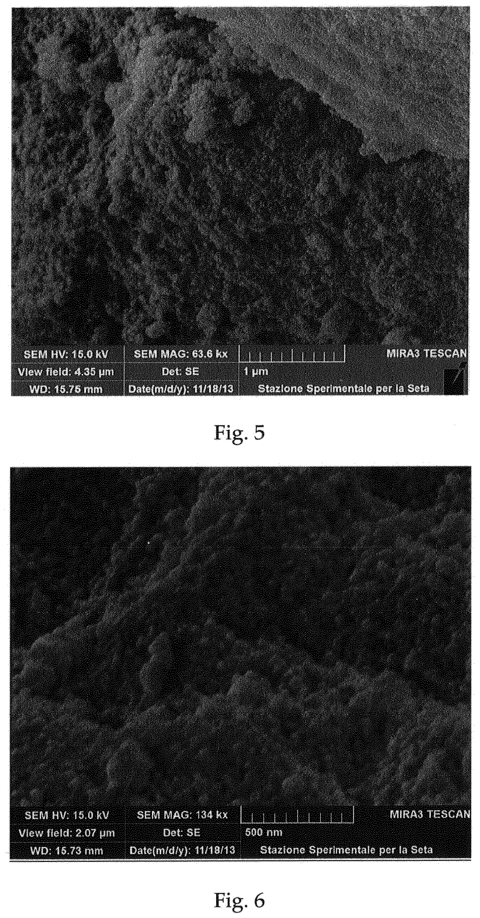

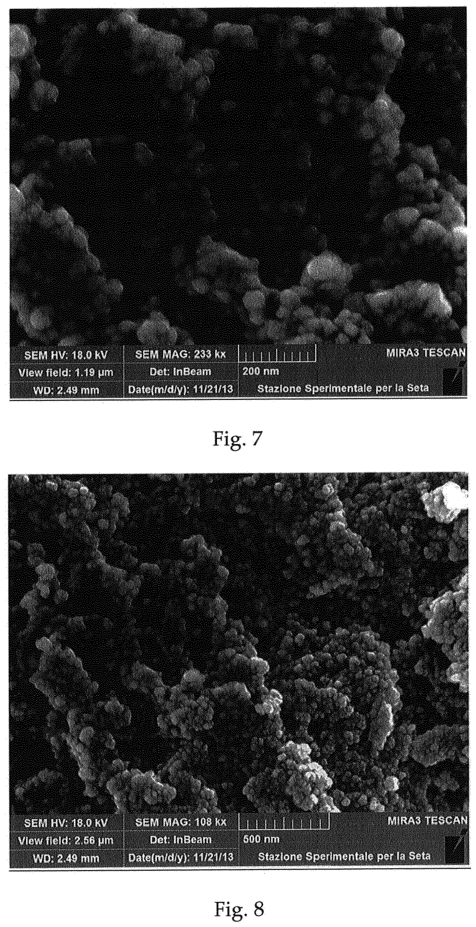

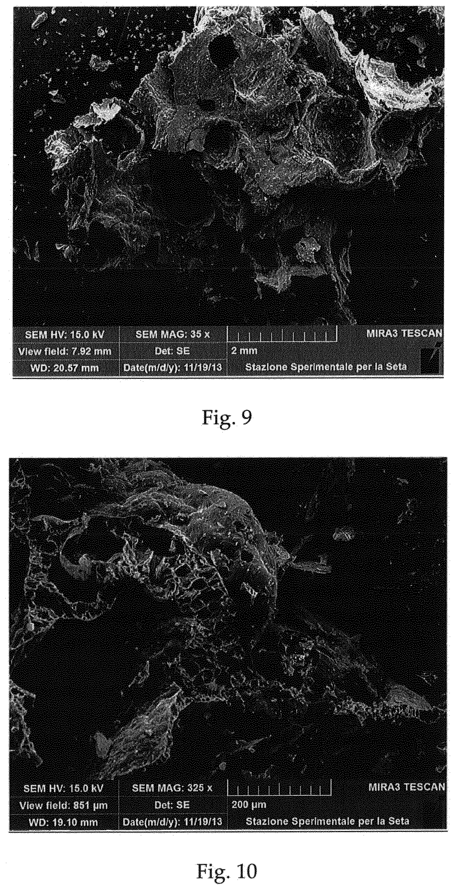

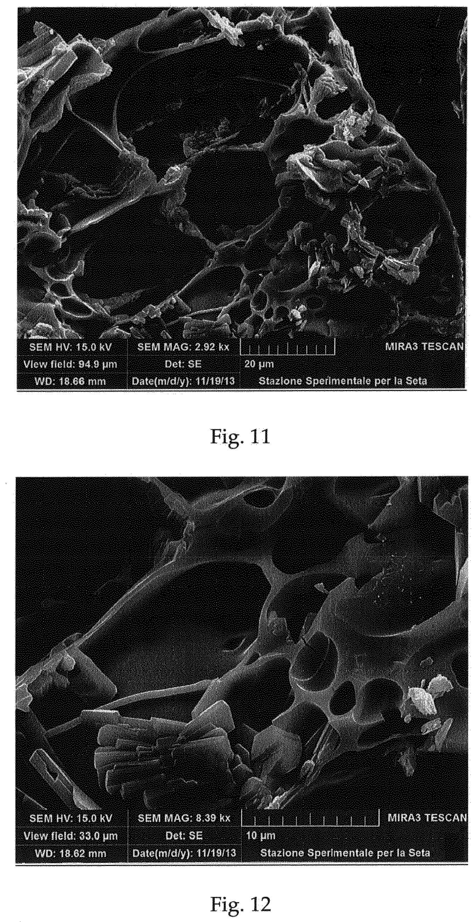

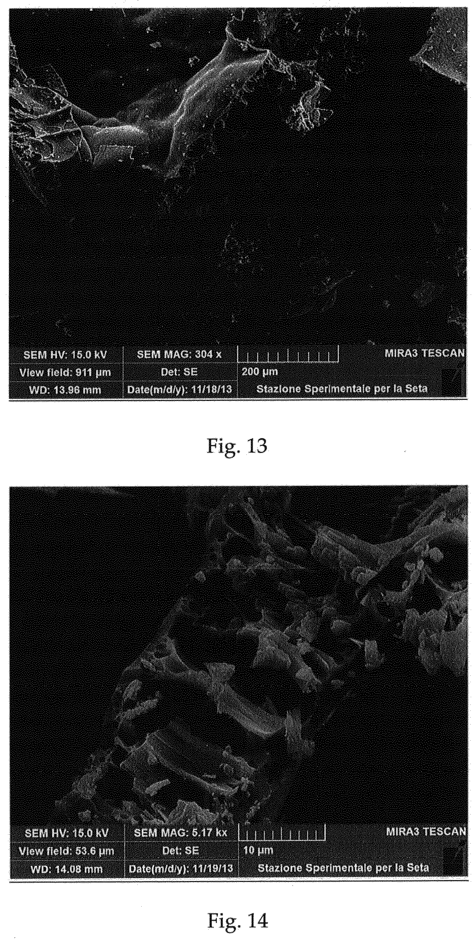

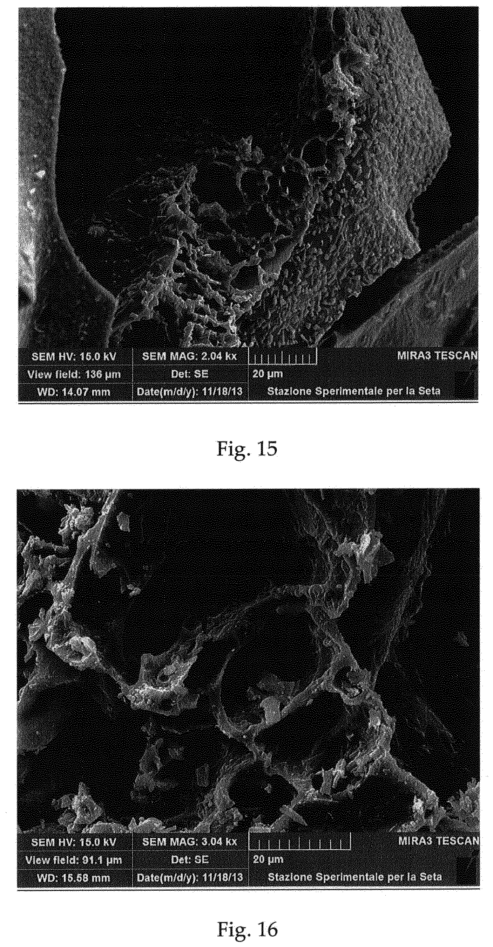

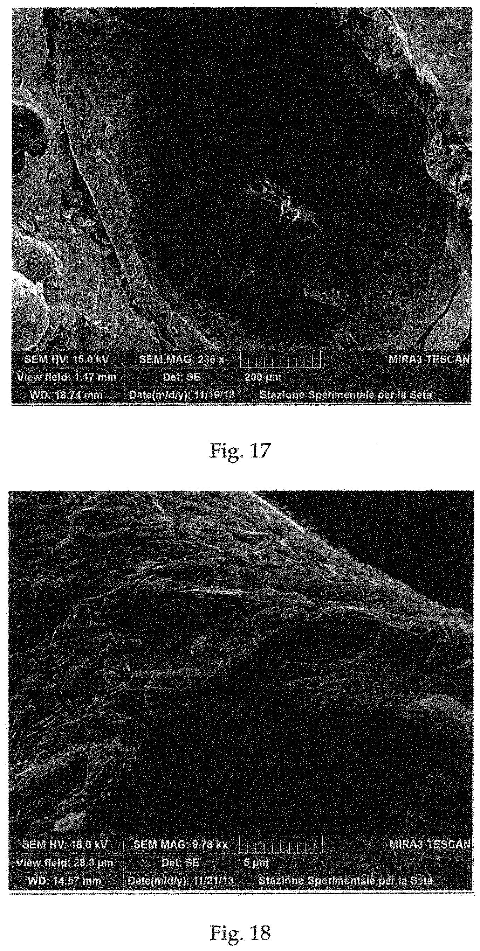

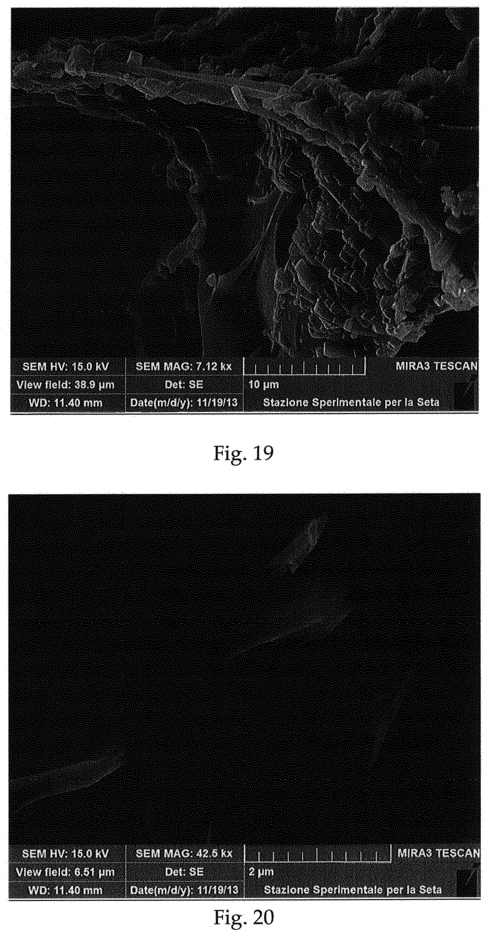

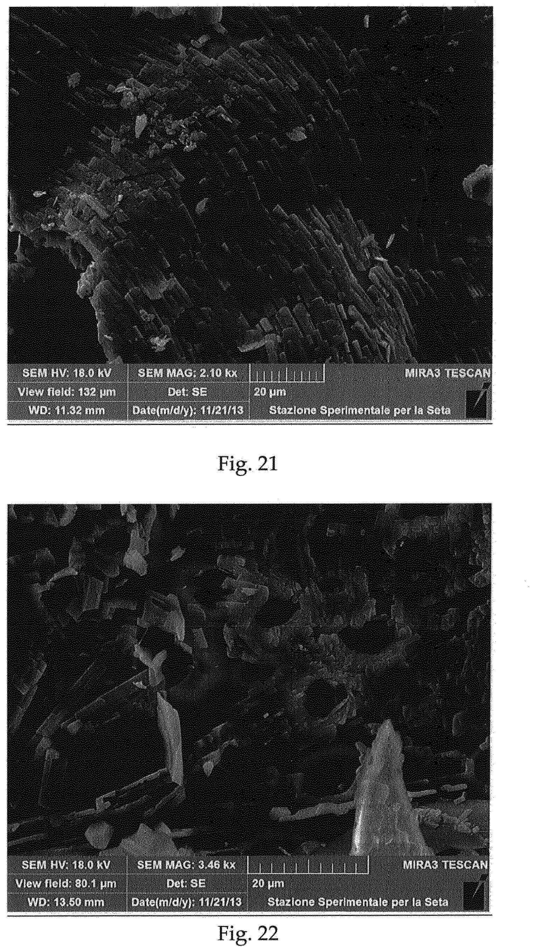

## Claims

1. A low density surface coating paste for plaster, including a silicate aerogel base, **characterized in that** it comprises, in percentage by weight:
- a mixture of aerogel with two components from 1 to 50%, including:
- silicate aerogel, derived from gel obtained from a process to dry wet silica, from 1 to 38%;
- aerogel derived from by-products of rice processing, from 1 to 80%;
- binders from 1 to 30%;
- ground cork from 1 to 15%;
- inert fillers from 0.1 to 10%;
- water, residual percentage.

2. The low density surface coating paste for plaster according to claim 1, **characterized in that** said mixture of aerogel with two components comprises, in percentage by weight:
- silicate aerogel, derived from gel obtained from a process to dry wet silica, 38% maximum;
- aerogel derived from gel obtained from by-products of rice processing, 35% maximum.

3. The low density surface coating paste for plaster according to claim 2, **characterized in that** it also comprises, in percentage by weight:
- binders, 18% maximum.

4. The low density surface coating paste for plaster according to one or more of claims 1 to 3, **characterized in that** said binders belong to the family of acrylic resins.

5. The low density surface coating paste for plaster according to claim 1 and/or 4, **characterized in that** said inert fillers comprise ceramic microspheres.

6. The low density surface coating paste for plaster according to claim 1 and/or one or more of claims 4 to 5, **characterized in that** said inert fillers comprise ceramic macrospheres.

7. The low density surface coating paste for plaster according to claim 1 and/or one or more of claims 4 to 6, **characterized in that** said inert fillers comprise polystyrene beads.

8. The low density surface coating paste for plaster according to one or more of the preceding claims, **characterized in that** it has a specific weight between 0.025 g/cm³ and 0.060 g/cm³.

## Patentansprüche

1. Oberflächenbeschichtungspaste mit niedriger Dichte für Verputz, die eine Silicat-Aerogelbasis umfasst, **dadurch gekennzeichnet, dass** sie in Prozentanteilen des Gewichts Folgendes umfasst:
- eine Aerogelmischung mit zwei Komponenten von 1 bis 50%, umfassend:
- Silicat-Aerogel, ein Derivat eines aus einem Trocknungsprozess feuchten Siliciumdioxids gewonnenen Gels, von 1 bis 38%;
- Aerogel, gewonnen aus Nebenprodukten von Reisverarbeitung, von 1 bis 80%;
- Bindemittel von 1 bis 30%;
- gemahlener Kork von 1 bis 15%;
- Inerte Stoffe von 0,1 bis 10%;
- Wasser, restlicher Prozentsatz.

2. Oberflächenbeschichtungspaste mit niedriger Dichte für Verputz gemäß Anspruch 1, **dadurch gekennzeichnet, dass** besagte Aerogel-Mischung mit zwei Komponenten in Prozentanteilen des Gewichts Folgendes umfasst:
- Silicat-Aerogel, ein Derivat eines aus einem Trocknungsprozess feuchten Siliciumdioxids gewonnenen Gels, maximal 38%;
- Aerogel, gewonnen aus Nebenprodukten von Reisverarbeitung, maximal 35%.

3. Oberflächenbeschichtungspaste mit niedriger Dichte für Verputz gemäß Anspruch 2, **dadurch gekennzeichnet, dass** sie außerdem in Prozentanteilen des Gewichts Folgendes umfasst:
- Bindemittel 18%, maximal.

4. Oberflächenbeschichtungspaste mit niedriger Dichte für Verputz gemäß einem oder mehreren Ansprüchen von 1 bis 3, **dadurch gekennzeichnet, dass** besagte Bindemittel der Familie der Acrylharze angehören.

5. Oberflächenbeschichtungspaste mit niedriger Dichte für Verputz gemäß Anspruch 1 und/oder 4, **dadurch gekennzeichnet, dass** besagte inerte Stoffe Keramik-Mikrokugeln umfassen.

6. Oberflächenbeschichtungspaste mit niedriger Dichte für Verputz gemäß Anspruch 1 und/oder einem oder mehreren Ansprüchen von 4 bis 5, **dadurch gekennzeichnet, dass** besagte inerte Stoffe Keramik-Makrokugeln umfassen.

7. Oberflächenbeschichtungspaste mit niedriger Dichte für Verputz gemäß Anspruch 1 und/oder einem oder mehreren Ansprüchen von 4 bis 6, **dadurch gekennzeichnet, dass** besagte inerte Stoffe kleine Polystyrol-Perlen umfassen.

8. Oberflächenbeschichtungspaste mit niedriger Dichte für Verputz gemäß einem oder mehreren der vorhergehenden Ansprüche, **dadurch gekennzeichnet, dass** sie ein spezifisches Gewicht zwischen 0,025 g/cm³ und 0,060 g/cm³ umfasst.

## Revendications

1. Pâte de revêtement de surface à faible densité pour enduit, comprenant une base d'aérogel de silicate, **caractérisée par le fait qu'**elle comprend, en pourcentage de poids :
- un mélange d'aérogel à deux composants de 1 à 50 %, incluant :
- aérogel de silicate, issu de gel obtenu par processus de séchage de silice humide, de 1 à 38 % ;
- aérogel obtenu à partir de sous-produits du traitement du riz, de 1 à 80 % ;
- liants de 1 à 30 % ;
- liège moulu de 1 à 15 % ;
- charges inertes de 0,1 à 10 % ;
- eau, pourcentage résiduel.

2. Pâte de revêtement de surface à faible densité pour enduit selon la revendication 1, **caractérisée par le fait que** ledit mélange d'aérogel à deux composants comprend, en pourcentage de poids :
- aérogel de silicate, issu de gel obtenu par processus de séchage de silice humide, 38 % maximum ;
- aérogel obtenu à partir de sous-produits du traitement du riz, 35 % maximum.

3. Pâte de revêtement de surface à faible densité pour enduit selon la revendication 2, **caractérisée par le fait qu'**elle comprend également, en pourcentage de poids :
- liants 18 %, maximum.

4. Pâte de revêtement de surface à faible densité pour enduit selon une ou plusieurs des revendications 1 à 3, **caractérisée par le fait que** lesdits liants appartiennent à la famille des résines acryliques.

5. Pâte de revêtement de surface à faible densité pour enduit selon la revendication 1 et/ou 4, **caractérisée par le fait que** lesdites charges inertes comprennent des microbilles céramiques.

6. Pâte de revêtement de surface à faible densité pour enduit selon la revendication 1 et/ou une ou plusieurs des revendications de 4 à 5, **caractérisée par le fait que** lesdites charges inertes comprennent des macrobilles céramiques.

7. Pâte de revêtement de surface à faible densité pour enduit selon la revendication 1 et/ou une ou plusieurs des revendications de 4 à 6, **caractérisée par le fait que** lesdites charges inertes comprennent des perles de polystyrène.

8. Pâte de revêtement de surface à faible densité pour enduit selon une ou plusieurs des revendications précédentes, **caractérisée par le fait qu'**elle possède un poids spécifique compris entre 0,025 g/cm³ et 0,060 g/cm³.
